(19) Europäisches Patentamt
European Patent Office
Office européen des brevets

(11) **EP 4 636 982 A1**

## (12) EUROPEAN PATENT APPLICATION

(43) Date of publication:
**22.10.2025 Bulletin 2025/43**

(21) Application number: **24170827.0**

(22) Date of filing: **17.04.2024**

(51) International Patent Classification (IPC):
**H02J 7/00** (2006.01)

(52) Cooperative Patent Classification (CPC):
**H02J 7/007; H02J 7/00032**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **iLOQ Oy**
**90590 Oulu (FI)**

(72) Inventors:
• **Tikkanen, Väinö**
**90590 Oulu (FI)**
• **Pitsinki, Lasse**
**90590 Oulu (FI)**

(74) Representative: **Kolster Oy Ab**
**Salmisaarenaukio 1**
**P.O. Box 204**
**00181 Helsinki (FI)**

## (54) CHARGING SYSTEM AND CHARGING METHOD

(57) A charging system of an electromechanical lock comprises a direct-current-direct-current converter (100) that receives electric power from one electric source of electric sources (SOURCE 1, SOURCE 2, SOURCE 3) of different types, the electric source (SOURCE 1, SOURCE 2, SOURCE 3) varying. A data processing unit (204) receives information relating to electric power intaken from the one of the sources (SOURCE 1, SOURCE 2, SOURCE 3) by DC-DC converter (100), the DC-DC converter (100) feeding electric power to an electric energy storage (206) of the electromechanical lock for charging the electric energy storage (206) to be used for operation of the electromechanical lock. The data processing unit (204) forms repeatedly control signals based on the information on the electric power intaken by the DC-DC converter (100), and feed the control signals to a feedback input (FB) of the DC-DC converter (100) in order to control the intake of the electric power of the DC-DC converter (100) from said one of the sources (SOURCE 1, SOURCE 2, SOURCE 3).

FIG. 4

**EP 4 636 982 A1**

## Description

## Field

The invention relates to a charging system of and a charging method for an electromechanical lock.

## Background

Various types of electromechanical locking systems are replacing traditional mechanical locking systems and wired access control systems. Wireless electromechanical locks may not need electric power sources such as batteries for their operation. Instead, they may generate electric power within the lock or receive the required electric power from an electric device of the user. The electro-mechanical lock may thus be user-powered or externally wirelessly powered. Electro-mechanical locking systems provide a user with good security, flexible access management of keys and they are easy to install, for example. However, further refinement is needed for making the electromechanical locks operate more effectively with the electric power they have for their operation from various sources.

## Brief description

The present invention seeks to provide an improvement in charging.

The invention is defined by the independent claims. Embodiments are defined in the dependent claims.

If one or more of the embodiments is considered not to fall under the scope of the independent claims, such an embodiment is or such embodiments are still useful for understanding features of the invention.

## List of drawings

Example embodiments of the present invention are described below, by way of example only, with reference to the accompanying drawings, in which

    Figure 1A illustrates an example of an electromechanical lock with a mechanical key;
    Figure 1B illustrates an example of an electromechanical lock with a knob or handle for providing energy for operation of the electromechanical lock;
    Figure 2 illustrates an example of feeding electric energy wirelessly to the electromechanical lock;
    Figure 3 illustrates an example of an electric circuitry of the electromechanical lock;
    Fig. 4 illustrates an example of a charging system of the electromechanical lock with a DC-DC converter;
    Fig. 5 illustrates control signal(s), a reference level and switching relating to the DC-DC converter;
    Fig. 6A and 6B illustrate different duty cycles of the DC-DC converter;
    Fig. 7 illustrates a data processing unit; and
    Figure 8 illustrates of an example of a flow chart of a charging method.

## Description of embodiments

The following embodiments are only examples. Although the specification may refer to "an" embodiment in several locations, this does not necessarily mean that each such reference is to the same embodiment(s), or that the feature only applies to a single embodiment.

Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. All combinations of the embodiments are considered possible if their combination does not lead to structural or logical contradiction. Single features of different embodiments may also be combined to provide other embodiments.

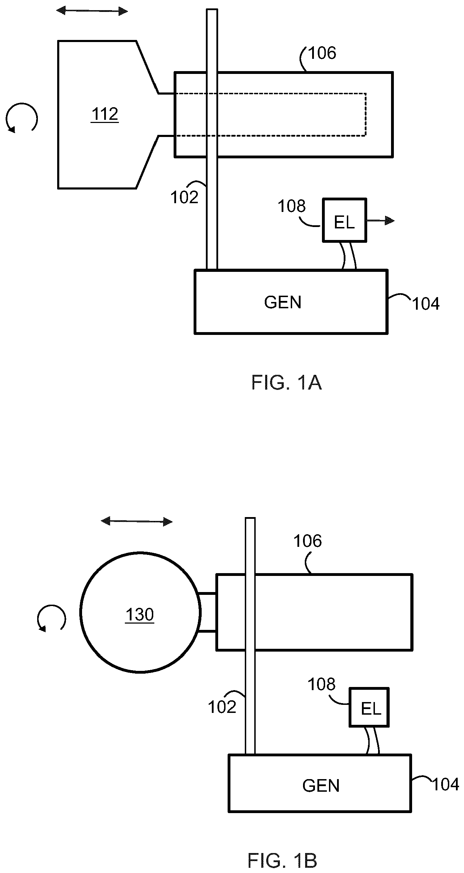

Electric power for full or partial operation of the electromechanical lock can be received in various manners. In embodiment examples of which are illustrated in Figs 1A and 1B, mechanical work of a user can be transformed into electrical power. That is, kinetic energy of a turn of a knob or handle of a door, or a turn or linear movement of a key of the electromechanical lock can be transformed by an electric generator into electric power for the electromechanical lock. The electric generator converts power of motion into electric power. Instead of referring to energy, the word energy may be used in general, i.e. energy of motion is converted into electric energy, for example. Power refers to energy per time unit. Additionally or alternatively, electric power may be provided by a light cell, a vibration harvester, temperature harvester, piezo element(s), for example, without limiting to these.

Fig. 1A illustrates an example of an electromechanical lock with an electromechanical key 112. A transmission mechanism 102 may convey the kinetic energy to a generator 104 while the user is turning a key 112 in the electromechanical lock. Alternatively or additionally, kinetic energy of the linear movement of the key 112 into and/or inside the main shaft 106 may be received by the transmission mechanism 102 that conveys the kinetic energy to the electric generator 104. The kinetic energy may alternatively be called motion energy. The electric generator 104, in turn, converts the kinetic energy into electric energy. The electric generator 104 then feeds the electric energy to an electric circuit 108 of the electromechanics lock. The electric circuit 108 participates the electric operation of the electromechanical lock. A person skilled in the art is familiar with the electromechanic operation of the electromechanical lock, *per se.*

In Figure 1B, the transmission mechanism 102 conveys the kinetic energy of a turning handle or knob 130 that the user is turning, pushing and/or bending to the electric generator 104. Apart from the handle or knob 130, other suitable turning mechanisms may additionally or alternatively be used for receiving motion energy from the work of the user. In a similar manner to the example of Fig. 1A, the electric generator 104 converts the kinetic energy into electric energy.

In examples of Figs. 1A and 1B, the electric generator 104 may be a permanent magnet generator, for example. The output power of the generator 104 depends on rotating speed, terminal resistance and terminal voltage of the electronic and the constants of the electric generator 104.

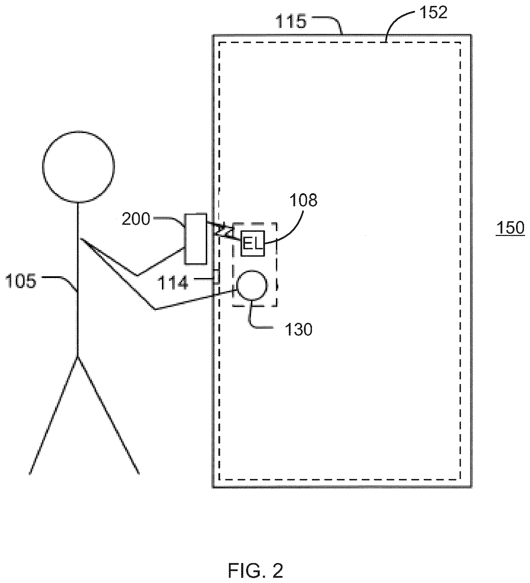

Fig. 2 illustrates an embodiment of an electronic locking system. The key 112 (not shown in Fig. 2, see Fig. 1A) may be an electronic key for wirelessly opening the electromechanical lock that is wireless and batteryless, or if a battery exists it may be in use seldom or exceptionally. The key 112 may be carried by a person 105 as a part of his wireless communication device 200, for example. That means, the key 112 may be an application program in the wireless communication device 200, for example. Alternatively, the key 112 may be a separate wireless electronic communication device that is configured to transmit electromagnetic radiation to the electric circuit 108 of the electromechanical lock. The electromagnetic radiation may carry deterministic digital information on the key 112 and/or the person 105 using the key 112.

The communication device 200 refers to a portable electric device. The device may be a computing device and/or a communication device. Such electric devices include devices such as a mobile phone, a smartphone, a tablet computer, a personal digital assistant (PDA), a personal computer or merely a portable key that can communicate wirelessly with the electromechanical lock. The communication device 200 may have a wireless network channel connection to a wireless network such as the Internet. The wireless connection channel 202 and the wireless network 204 may be implemented according to the GSM (Global System for Mobile Communications), WCDMA (Wideband Code Division Multiple Access), WLAN (Wireless Local Area Network) or any other suitable standard/non-standard wireless communication means.

The communication device 200 is equipped with a short-range wireless communication unit configured to communicate with other respective short-range units upon detecting such a unit. In an embodiment, short-range wireless communication is realised with a Near Field Communication (NFC) technique. NFC is a set of short-range wireless technologies, typically requiring a distance of about 4 cm or less. NFC may operate at 13.56 MHz on ISO/IEC 18000-3 air interface and at rates ranging from about 106 kbit/s to 424 kbit/s. NFC always involves an initiator and a target; the initiator actively generates a radio frequency (RF) signal that can power a passive target. This enables NFC targets to take simple form factors such as tags, stickers, key fobs, or cards that do not require batteries. Above, ISO stands for International Organization for Standardization and IEC for the International Electrotechnical Commission.

In Fig. 2, a user 105 is at a barrier structure 115 that is configured to cover fully or partially a hole 152 of a wall 150. The wall 150 may have a frame fully or partially round the hole (frame is not illustrated in Fig. 2). The barrier structure 115 is of solid and hard material and may be made of one or more solid and hard materials. The barrier structure 115 is movable or turnable for opening and/or closing the hole 152 of the wall 150, the hole 152 serving as an entrance from one side of barrier structure 115 to the other side. The barrier structure 115 may swing on one or more hinges or slide along a rail or grove, for example. The barrier structure 115 can usually be repeatedly opened and closed. The barrier structure 115 may be a door, gate or window, for example. The barrier structure 115 may be locked with the wall 150 in a closed position by the electromechanical lock such that the barrier structure 115 is immobile fully or partially, and in the locked position an entrance from one side to the other side of the barrier structure 115 is fully blocked. The partial mobility of the barrier structure 115, the partial mobility being potential and/or optional, may relate to allowable tolerance, for example. When the electromechanical lock is opened, also the barrier structure 115 may be opened for passing through the hole 152 of the wall 150. In Fig. 2, a bolt 114 of the electromechanical lock is an example how to immobilize i.e. lock the barrier structure 115 with the wall 150. A person skilled in the art is familiar with immobilization and/or locking the barrier structure 115 with the wall 150, *per se.*

In a passive communication mode of the communication device 200 provides a suitable electromagnetic field, and the electronic circuit 108 of the electromagnetic lock responds to the electromagnetic field. In this mode, the lock may draw its operating power from the electromagnetic field generated by the communication device 200, thus making the lock a transponder.

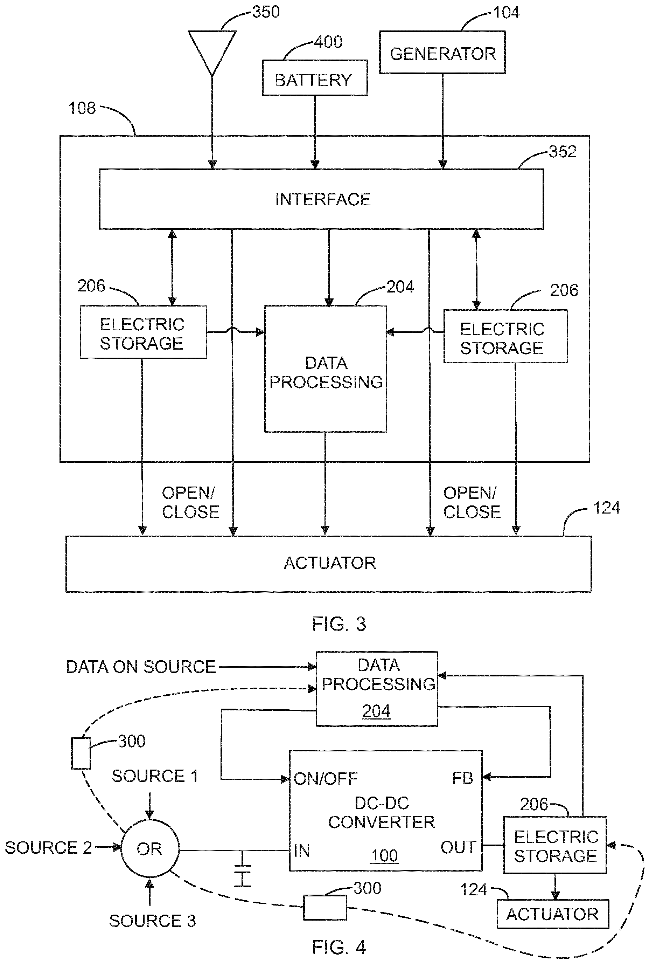

Fig. 3 illustrated an example of the electric circuit 108 of the electromechanical lock. The electric power may come from the electric generator 104, a RF (radio frequency) antenna 350 or battery 400 to an interface 352 of the electromechanical lock. The interface 352 may comprise a suitable electric circuit for conveying electric power from the antenna 350, generator 104 or the battery 400 to an actuator 124, electric energy storage 206 and/or the data processing unit 204. The electric circuit 108 comprises an electric energy storage 206 and an actuator 124. The data processing unit 204 receives power for its operation from the radio frequency signal received by the RF antenna 350. However, at the beginning of the electric power reception particularly from the generator 104 or the antenna 350, the data processing unit 204 may receive electric power directly from the interface 352. The interface 352 that comprises the RF interface may convert the RF signals received from the antenna 350 into DC (direct current) electric signals for charging the electric energy storage 206. The interface 352 may convert the electric power from the electric generator 104 into DC signals for changing the electric energy storage 206. The same is true for the battery 400 although the battery 400 is typically not used or it is used in cases other electric power sources fail or cannot be utilized.

In an embodiment, the interface 352 that comprises the RF interface may comprise an NFC transceiver.

The data processing unit 204 may be a microcontroller, a processor or an electric circuitry comprising a memory for storing a computer program of instructions. The data processing unit 204 is configured to process authentication procedure in connection with the communication device 200 or electromechanical key 112. After a successful authentication and when sufficient electric power level is obtained, the data processing unit 204 may start operating and control the actuator 124 to set the lock in a mechanically openable state. Then the electric energy storage 206 couples electric power to the actuator 124 for performing the opening operation of the electromechanical lock. After a predefined delay the actuator 124 is reset back to the locked state. In an embodiment, the actuator 124 may comprise an electric motor which is driven in one direction in the openable state and in an opposite direction for reset, for example. When the actuator 124 has set the electromechanical lock in a mechanically openable state, the locking mechanism 114 can be moved by operating the user interface such as the key, knob and/or handle 112,130, for example. Other suitable operating mechanisms may be used as well.

The electric energy storage 206 is configured to store electric energy and it is also configured to discharge the electric power for a desired purpose in a controlled manner. That is, they are repeatedly chargeable and dischargeable. The electric energy storage 206 may comprise capacitors. The number of capacitors may be a design feature.

The electronic circuitry 108 including the data processing unit 204 is configured to operate on the electric power received wirelessly from the communication device 106 or from the electric generator 104. In addition, the electric energy storage 206 of the electronic circuitry 108 may be configured to receive and store operating power for the actuator means.

Energy E of the electric energy storage 206 is

$$E = \frac{Q^2}{2C}$$

, where Q is the electric charge stored in the electric energy storage and C is a total capacitance of the electric energy storage 206. As a result, the total work at maximum that is attainable is also E. The energy receiver 400 may also receive at some moment a battery 402 that may after that be a source of electric power for the electromagnetic lock. In a corresponding manner to the antenna 350 and the generator 104, the battery 402 feeds electric power to an interface 352, which then conducts the electric power to the data processing unit 204, the actuator 124 and/or the electric energy storage 206.

As illustrated in Fig 4, the charging system of the electromechanical lock comprises a DC-DC converter 100 (Direct-Current-Direct-Current converter) that intakes electric power from one electric source of at least two different types of electric power sources SOURCE 1, SOURCE 2, SOURCE 3. The DC-DC converter may be a buck converter or a boost converter, for example. A person skilled in the art is familiar with the DC-DC converters, *per se.* The electric power source SOURCE 1, SOURCE 2, SOURCE 3 may vary over time or depending on usage of the electromechanical lock, where the electric power sources refer to the generator 104, the antenna 350 with NFC counterpart to the NFC of of the communication device 200 or the key 112 that is in the interface 352, and the battery 400. The generator 104 converts the power of muscles of a user into electric power or the battery 402, for example, while the NFC counterpart receives electric power from the NFC transceiver of the communication device 200 or the key 112. The battery 400, in turn, can directly feed electric power for the use of the electromechanical lock.

That means, at some moment of use of the electromechanical lock one of the electric power sources may provide electric power to operation of the electromechanical lock, and at some other moment of use of the electromechanical lock another of the electric power sources may provide electric power to operation of the electromechanical lock, and at some other moment, still another of the electric power sources may provide electric power. The different electric power sources may have different impedances and/or electric power levels, and the DC-DC converter 100 may act like an adapter between the electric power sources and the components that use the electric power. The charging system may be a part of the interface 352, for example.

The data processing unit 204 receives information relating to electric power received from one of the sources SOURCE 1, SOURCE 2, SOURCE 3 by the direct-current-direct-current converter 100. That happens in response to reception of electric power by the data processing unit 204. The DC-DC converter 100 then feeds instantly or after a delay electric power to an electric energy storage 206 of the electromechanical lock for charging the electric energy storage 206 to be used for operation of the electromechanical lock.

The data processing unit 204 forms repeatedly control signals based on the information on the electric power intaken by the DC-DC converter 100. The data processing unit 204 feeds the control signals to a feedback input FB of the DC-DC converter 100 in order to control the reception of the electric power of the DC-DC converter 100 from said one of the sources SOURCE 1, SOURCE 2, SOURCE 3. Namely, when operational conditions of the DC-DC converter 100 are changed by the control signal, also the electric power it takes changes. The control based on the signals fed to the feedback input FB of the DC-DC converter 100 is a fast way to change the operation of the DC-DC converter 100. That is performed instead of the conventional connection through an RC-circuit (resistance-capacitor circuit) at another input of the DC-DC converter 100, the RC-circuit causing a delay.

In an embodiment, the data processing unit 204 may receive information relating to both the electric power intaken by the DC-DC converter 100 and electric power output by the DC-DC converter 100. The data processing unit 204 may then form the control signals based on the information on the electric power intaken by the DC-DC converter 100 and the electric power output by the DC-DC converter 100.

In an embodiment, the data processing unit 204 may sense the charge level of the electric energy store 206 and feed a stop signal to an enable input ON/OFF of the DC-DC converter 100 in response to a detection of a maximum charge level of the electric energy store 206. The stop signal stops conversion operation and reduces or prevents electric power consumption of the DC-DC converter 100. That is a technical advantage because the electric power of the operation of the DC-DC converter 100 is thus saved to other use for the electromechanical lock. In an embodiment, the charging system includes one or more sensors that detect the charge level of the electric energy store 206 and send a signal including information on the charge level of the electric energy store 206. A person skilled in the art is familiar with sensing a charge level of the electric energy store 206.

In an embodiment, the data processing unit 204 may sense voltage received from one of the sources SOURCE 1, SOURCE 2, SOURCE 3. The data processing unit 204 may then, in response to a drop of a level of the voltage, feed one or more of the control signals to the DC-DC converter 100, the one or more control signals lowering electric power supplied by said one of the sources SOURCE 1, SOURCE 2, SOURCE 3 to the DC-DC converter 100.

In an embodiment, the data processing unit 204 may feed one after another a plurality of the controls signals that cause the DC-DC converter 100 to increase intake of electric power from said one of the sources SOURCE 1, SOURCE 2, SOURCE 3. The data processing unit 204 may then search for and detect a drop level at which voltage from said one of the sources SOURCE 1, SOURCE 2, SOURCE 3 has a drop. The drop of voltage means that the voltage level that is received from said one of the sources SOURCE 1, SOURCE 2, SOURCE 3 starts to go down. That in turn means said source is overloaded and cannot output more electric power. In this kind of overloaded situation, the output voltage of the DC-DC converter 100 may start to decrease or drop. Before causing a larger decrease in output voltage of the DC-DC converter 100, the data processing unit 204 may feed one or more of the control signals that keep electric power taken from said one of the sources SOURCE 1, SOURCE 2, SOURCE 3 at a maximum level below the drop level. If an NFC source of a communication device 200 or the key 112 cannot satisfy the need of electric energy of the counterpart in the electromechanical lock, the voltage level for the DC-DC-converter 100 drops, and the NFC-counterpart source in the electromechanical lock experiences a drop of its operational voltage and it may reset itself (NFC-counterpart comprises antenna 350 and electrical circuit of the counterpart resides in interface 352, see Fig. 3). That causes a delay for charging of the electric energy storage 206 and the user of the electromechanical lock also experiences a delay to open the lock because it takes a longer time to charge the energy storage 206 and that leads to a delay to be able to open the lock. Hence, it is a technical advantage to avoid power outages but still keep the energy flow from the source to the electric energy storage constant and high.

In an embodiment, the data processing unit 204 may receive information on a type of the one of the sources SOURCE 1, SOURCE 2, SOURCE 3 that provides the DC-DC converter 100 with the electric power. The data processing unit 204 may then, in response to the information, feed the control signals that adjust the reception of electric power of the DC-DC converter 100 from said one of the sources SOURCE 1, SOURCE 2, SOURCE 3 to a level that corresponds to an output potential of said one of the sources SOURCE 1, SOURCE 2, SOURCE 3. Namely, the NFC and the electric generator 104 generate different levels of electric power. The NFC is typically a weak electric power source compared with the generator 104. Then the power intake of the DC-DC converter 100 is set to a sustainable level that does not overload the source.

The DC-DC converter 100 can be considered to comprise an electric circuit that has a switch, an inductor, a diode and a capacitor, and the input electric energy propagates from the input of the DC-DC converter 100 through these components to the output of the DC-DC converter 100. Direct current input to the DC-DC converter 100 is converted to an alternating current based on switching of the switch. Then the voltage level of the alternating current may be raised or lowered inside the DC-DC converter 100. The alternating current may after that be converted to direct current that is then output by the DC-DC converter 100. The switching of the switch depends on a reference level that is fed to the FB input of the DC-DC- converter 100. Typically, the reference level is determined by divider resistors. This document teaches that the data processing unit 204 feeds the reference level by the control signal to the FB input of the DC-DC converter 100.

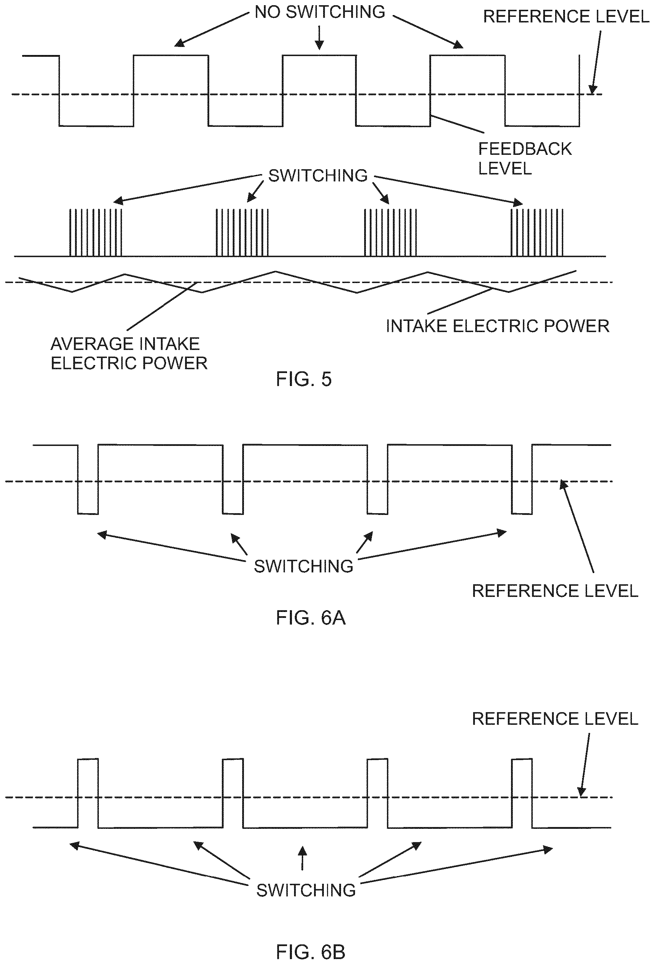

Fig. 5 illustrates the operation of the DC-DC converter 100. The data processing unit 204 sets a feedback level that is compared with a reference level in the DC-DC converter 100. When the feedback level is below the reference level, a switch of the DC-DC converter 100, which is a switched mode power supply, is switching and outputting electric power. When the feedback level is above the reference level, the switch of the DC-DC converter is not switching and the DC-DC converter 100 does not output electric power. A person skilled in the art is familiar with the switched mode power supplies, *per se.* The reference level is generated within the DC-DC converter 100. The feedback level is determined by the control signal and the feedback level varies as the control signal varies. In the example of Fig. 5 the reference level is at a level causing 50 % duty cycle. That is, the DC-DC converter 100 is switching half of the time and not switching another half of the time. Switching of the switch of the DC-DC converter 100 is performed when the feedback level of the control signal is below the reference level. When the switch of the DC-DC converter 100 is switching, it both takes electric power from one of the sources and outputs electric power. Then the intake of the electric power of the DC-DC converter 100 increases. The switching of the switch can be stopped in response to increasing the feedback level of the control signal above the reference level. That leads to a decay of the electric power that the DC-DC converter intakes or receives as shown in Fig. 5.

In an embodiment, the data processing unit 204 may feed one or more of the control signals that adjust a duty cycle of pulse-width modulation of the DC-DC converter 100. That can be seen in Fig. 5. The first pulse on the left side can be considered a first control signal. It is above the reference level and the switch is not switching. The next pulse is below the reference level and the switch is switching, and so on.

In an embodiment an example of which is illustrated in Fig. 4, the charging system may perform partial pre-charging of the electric energy storage 206 from said one of the sources SOURCE 1, SOURCE 2, SOURCE 3 without conversion operation of the DC-DC converter 100. The charging system then comprises one or more electric components 300 that limit inrush current to the electric energy storage 206 in conjunction with the partial pre-charging. The data processing unit 204 then detects or estimates the finish of the partial pre-charging and starts controlling charge operation of the electric energy storage 206 in response to the finish of the partial pre-charging. The control may refer to the usage of the DC-DC-converter 100. When a source of electric power starts delivering electric power to the interface at the beginning of the partial pre-charging phase, it may cause a sudden peak of electric current. Namely, the peak appears because the source (SOURCE 1, SOURCE 2, SOURCE) sees (as if) a low impedance in the electromechanical lock. That may cause overload to the source. The one or more electric components 300 may spread the energy of the electric current peak to a wider time scale thus eliminating or reducing the overload and/or its possibility. In an embodiment, the electric component 300 may comprise one or more resistors, for example.

In an embodiment, the data processing unit 204 may sense electric power intaken and output by the DC-DC converter 100 and the data processing unit 204 may have a computer program and/or statistical data on dependence between sensed electric powers and output electric current of the DC-DC converter 100. Then the data processing unit 204 may form and feed one or more of the control signals to DC-DC converter 100 that are configured to output a constant electric current over time. An example of that is illustrated in Fig. 5 by intake electric power and average intake power.

In an embodiment, the data processing unit 204 may sense electric current intaken and output by the DC-DC converter 100. Then the data processing unit 204 may feed one or more of the control signals to DC-DC converter 100 that can output a constant electric current over time based on the control signals.

In an embodiment, the data processing unit 204 may control the electric energy storage 206 to store electric energy and supply electric power to an actuator 124 of the electromechanical lock for causing mechanical movement of the electromechanical lock synchronously for locking operation and/or unlocking operation.

Fig. 6A illustrates an example of a low intake of electric current. The switching and the conversion of voltage is performed during the pulses are below the reference level. That means that the DC-DC converter 100 outputs electric power only during a small fraction of each period. The duty cycle is then low. This situation may refer to a situation where the electric power comes through the antenna 350 from the NFC.

Fig. 6B illustrates an example of a high intake of electric current. The switching and the conversion of voltage is performed during the pulses are below the reference level. That means the DC-DC converter 100 outputs most of the time electric power. The duty cycle is high. This situation may refer to a situation where the electric power comes from the generator 104 or the battery 400.

In general, the duty cycle may vary about 0% to 100 %.

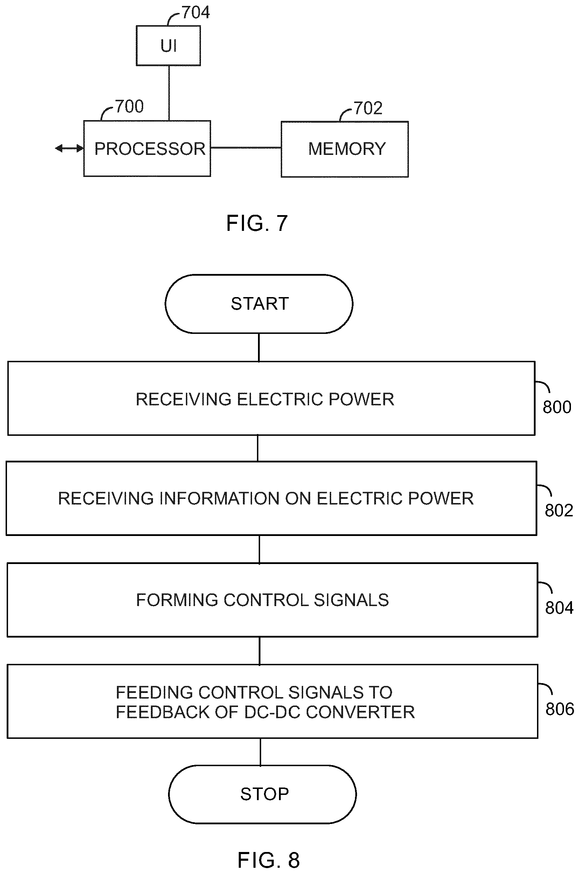

Fig. 7 illustrates an example of the data processing unit 204 that comprises one or more processors 700; and one or more memories 702 including computer program code. The one or more memories 700 and the computer program code may, with the one or more processors 700, cause charging system at least to: receive the information relating to electric power intaken from the one of the sources SOURCE 1, SOURCE 2, SOURCE 3 by the direct-current-direct-current converter 100, and form repeatedly control signals based on the information on the electric power intaken by the direct-current-direct-current converter 100, and feed the control signals to a feedback input FB of the direct-current-direct-current converter 100 in order to control the intake of the electric power of the direct-current-direct-current converter 100 from said one of the sources SOURCE 1, SOURCE 2, SOURCE 3.

The term "computer" includes a computational device that performs logical and arithmetic operations. For example, a "computer" may comprise an electronic computational device, such as an integrated circuit, a microprocessor, a mobile computing device, a laptop computer, a tablet computer, a personal computer, or a mainframe computer. A "computer" may comprise a central processing unit, an ALU (arithmetic logic unit), a memory unit, and a control unit that controls actions of other components of the computer so that steps of a computer program are executed in a desired sequence. A "computer" may also include at least one peripheral unit that may include an auxiliary memory (such as a disk drive or flash memory), and/or may include data processing circuitry.

A user interface 704, which the electromechanical lock may in an embodiment comprise, means an input/output device and/or unit. Non-limiting examples of a user interface include a touch screen, other electronic display screen, keyboard, mouse, microphone, handheld electronic controller, digital stylus, display screen, speaker, and/or projector for projecting a visual display.

Figure 8 is a flow chart of the charging method. In step 800, electric power is received from one electric source of at least two different types of electric sources SOURCE 1, SOURCE 2, SOURCE 3 by a DC-DC converter 100, the electric source SOURCE 1, SOURCE 2, SOURCE 3 being alternable.

In step 802, information relating to electric power intaken from the one of the sources SOURCE 1, SOURCE 2, SOURCE 3 by the DC-DC converter 100 is received by a data processing unit 204, the DC-DC converter 100 feeding electric power to an electric energy storage 206 of the electromechanical lock for charging the electric energy storage 206 to be used for operation of the electromechanical lock.

In step 804, control signals are formed repeatedly by the data processing unit 204 based on the information on the electric power intaken by the DC-DC converter 100.

In step 806, the control signals are fed to a feedback input FB of the DC-DC converter 100 in order to control the intake of the electric power of the DC-DC converter 100 from said one of the sources SOURCE 1, SOURCE 2, SOURCE 3.

The method shown in Figure 8 may be implemented as a logic circuit solution or computer program. The computer program may be placed on a computer program distribution means for the distribution thereof. The computer program distribution means is readable by a data processing device, and it encodes the computer program commands, carries out the measurements and optionally controls the processes on the basis of the measurements.

The computer program may be distributed using a distribution medium which may be any medium readable by the controller. The medium may be a program storage medium, a memory, a software distribution package, or a compressed software package. In some cases, the distribution may be performed using at least one of the following: a near field communication signal, a short distance signal, and a telecommunications signal.

It will be obvious to a person skilled in the art that, as technology advances, the inventive concept can be implemented in various ways. The invention and its embodiments are not limited to the example embodiments described above but may vary within the scope of the claims.

**Claims**

1. A charging system, **characterized in that** the charging system of an electromechanical lock comprises

   a direct-current-direct-current converter (100) that is configured to receive electric power from one electric source of at least two electric sources (SOURCE 1, SOURCE 2, SOURCE 3) of different types, the electric source (SOURCE 1, SOURCE 2, SOURCE 3) being configured to vary;
   a data processing unit (204) that is configured to receive information relating to electric power intaken from the one of the sources (SOURCE 1, SOURCE 2, SOURCE 3) by the direct-current-direct-current converter (100), the direct-current-direct-current converter (100) being configured to feed electric power to an electric energy storage (206) of the electromechanical lock for charging the electric energy storage (206) to be used for operation of the electromechanical lock;
   the data processing unit (204) is configured to form repeatedly control signals based on the information on the electric power intaken by the direct-current-direct-current converter (100), and feed the control signals to a feedback input (FB) of the direct-current-direct-current converter (100) in order to control the intake of the electric power of the direct-current-direct-current converter (100) from said one of the sources (SOURCE 1, SOURCE 2, SOURCE 3).

2. The charging system of claim 1, **characterized in that** the data processing unit (204) that is configured to receive information relating to both the electric power intaken by the direct-current-direct-current converter (100) and electric power output by the direct-current-direct-current converter (100); and
   the data processing unit (204) is configured to form the control signals based on the information on the electric power intaken by the direct-current-direct-current converter (100) and the electric power output by the direct-current-direct-current converter (100).

3. The charging system of claim 1, **characterized in that** the data processing unit (204) is configured to sense the charge level of the electric energy store (206) and feed a stop signal to an enable input (ON/OFF) of the direct-current-direct-current converter (100) in response to a detection of a maximum charge level of the electric energy store (206), the stop signal being configured to stop conversion operation and reduce electric power consumption of the direct-current-direct-current converter (100).

4. The charging system of claim 1, **characterized in that** the data processing unit (204) is configured to sense voltage received from one of the sources (SOURCE 1, SOURCE 2, SOURCE 3), and the data processing unit (204) is, in response to a drop of a level of the voltage, configured to feed one or more of the control signals that are configured to lower the reception of electric power of the direct-current-direct-current converter (100) from said one of the sources (SOURCE 1, SOURCE 2, SOURCE 3).

5. The charging system of claim 1, **characterized in that** the data processing unit (204) is configured to feed one after another a plurality of the controls signals that are configured to cause increase of electric power from said one of the sources (SOURCE 1, SOURCE 2, SOURCE 3), detect a drop level at which voltage from said one of the sources (SOURCE 1, SOURCE 2, SOURCE 3) has a drop, and feed one or more of the control signals that are configured to keep electric power from said one of the sources (SOURCE 1, SOURCE 2, SOURCE 3) at a maximum level below the drop level.

6. The charging system of claim 1, **characterized in that** the data processing unit (204) is configured to receive information on a type of the one of the sources (SOURCE 1, SOURCE 2, SOURCE 3) the electric power of which the direct-current-direct-current converter (100) is configured to intake, the data processing unit (204) is, in response to the information, configured to feed the control signals that are configured to adjust the reception of electric power of the direct-current-direct-current converter (100) from said one of the sources (SOURCE 1, SOURCE 2, SOURCE 3) to a level that corresponds to an output potential of said one of the sources (SOURCE 1, SOURCE 2, SOURCE 3).

7. The charging system of claim 1, **characterized in that** the data processing unit (204) is configured to feed one or more of the control signals that are configured to adjust a duty cycle of pulse-width modulation of the direct-current-direct-current converter (100).

8. The charging system of claim 1, **characterized in that** the charging system is configured to perform partial pre-charging of the electric energy storage (206) from said one of the sources (SOURCE 1, SOURCE 2, SOURCE 3) without conversion operation of the direct-current-direct-current converter (100),

   the charging system comprises an electric component (300) that is configured to limit inrush current in conjunction with the partial pre-charging, and
   the data processing unit (204) that is configured to detect or estimate a finish of the partial pre-charging and control charging of the electric energy storage (206) in response to the finish of the partial pre-charging.

9. The charging system of claim 1, **characterized in that** the data processing unit (204) that is configured to sense electric power inataken and output by the direct-current-direct-current converter (100) and the data processing unit (204) has a computer program and/or statistical data on dependence between sensed electric powers and output electric current of the direct-current-direct-current converter (100), and the data processing unit (204) is configured to feed one or more of the control signals to direct-current-direct-current converter (100) that are configured to output a constant electric current over time.

10. The charging system of claim 1, **characterized in that** the data processing unit (204) that is configured to sense electric current intaken and output by the direct-current-direct-current converter (100), and the data processing unit (204) is configured to feed one or more of the control signals to direct-current-direct-current converter (100) to output a constant electric current over time.

11. The charging system of claim 1, **characterized in that** the data processing unit (204) is configured to control the electric energy storage (206) to store electric energy and supply electric power to an actuator (124) of the electromechanical lock for causing mechanical movement of the electromechanical lock synchronously for locking operation and/or unlocking operation.

12. A charging system of claim 1, **characterized in that** the data processing unit (204) comprises one or more processors (700); and one or more memories (702) including computer program code; the one or more memories (702) and the computer program code configured to, with the one or more processors (700), cause charging system at least to:

   receive the information relating to electric power intaken from the one of the sources (SOURCE 1, SOURCE 2, SOURCE 3) by the direct-current-direct-current converter (100); and

form repeatedly control signals based on the information on the electric power intaken by the direct-current-direct-current converter (100), and feed the control signals to a feedback input (FB) of the direct-current-direct-current converter (100) in order to control the intake of the electric power of the direct-current-direct-current converter (100) from said one of the sources (SOURCE 1, SOURCE 2, SOURCE 3).

**13.** A charging method, **characterized by**

receiving (800), by a direct-current-direct-current converter (100), electric power from one electric source of at least two different types of electric sources (SOURCE 1, SOURCE 2, SOURCE 3), the electric source (SOURCE 1, SOURCE 2, SOURCE 3) being variable;

receiving (802), by a data processing unit (204), information relating to electric power intaken from the one of the sources (SOURCE 1, SOURCE 2, SOURCE 3) by the direct-current-direct-current converter (100), the direct-current-direct-current converter (100) feeding electric power to an electric energy storage (206) of an electromechanical lock for charging the electric energy storage (206) to be used for operation of the electromechanical lock;

forming (804), by the data processing unit (204), repeatedly control signals based on the information on the electric power intaken by the direct-current-direct-current converter (100), and feeding (806) the control signals to a feedback input (FB) of the direct-current-direct-current converter (100) in order to control the intake of the electric power of the direct-current-direct-current converter (100) from said one of the sources (SOURCE 1, SOURCE 2, SOURCE 3).

FIG. 1A

FIG. 1B

FIG. 2

FIG. 3

FIG. 4

NO SWITCHING

REFERENCE LEVEL

FEEDBACK LEVEL

SWITCHING

INTAKE ELECTRIC POWER

AVERAGE INTAKE ELECTRIC POWER

FIG. 5

SWITCHING

REFERENCE LEVEL

FIG. 6A

REFERENCE LEVEL

SWITCHING

FIG. 6B

FIG. 7

FIG. 8

Europäisches
Patentamt

European
Patent Office

Office européen
des brevets

# EUROPEAN SEARCH REPORT

**Application Number**

EP 24 17 0827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 509 163 B2 (HANCHETT ENTRY SYSTEMS INC [US]) 29 November 2016 (2016-11-29) * column 1, line 1 - column 2, line 50; figure 5 * * column 4, line 11 - column 5, line 67 * ----- | 1-13 | INV. H02J7/00 |
| X | US 2022/311280 A1 (MUKUNDALA SUMANTH KUMAR [IN] ET AL) 29 September 2022 (2022-09-29) * paragraphs [0044] - [0055]; figures 1-4 * ----- | 1,12,13 | |
| A | US 2017/358952 A1 (BUTLER EDWARD [US] ET AL) 14 December 2017 (2017-12-14) * paragraphs [0022] - [0027]; figures 1-2 * ----- | 1,12,13 | |
| | | | **TECHNICAL FIELDS SEARCHED (IPC)** H02J |

The present search report has been drawn up for all claims

| Place of search | Date of completion of the search | Examiner |
|---|---|---|
| Munich | 25 September 2024 | Bergler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 0827

This annex lists the patent family members relating to the patent documents cited in  the above-mentioned European search report.
The members are as contained in the European Patent Office EDP file on
The European Patent Office is in no way liable for these particulars which are merely given for the purpose of information.

25-09-2024

| Patent document cited in search report | | Publication date | Patent family member(s) | | Publication date |
|---|---|---|---|---|---|
| US 9509163 | B2 | 29-11-2016 | CA | 2903690 A1 | 02-03-2016 |
| | | | GB | 2532311 A | 18-05-2016 |
| | | | GB | 2558324 A | 11-07-2018 |
| | | | GB | 2567795 A | 01-05-2019 |
| | | | US | 2016060902 A1 | 03-03-2016 |
| US 2022311280 | A1 | 29-09-2022 | EP | 4026226 A1 | 13-07-2022 |
| | | | US | 2022311280 A1 | 29-09-2022 |
| | | | WO | 2021044248 A1 | 11-03-2021 |
| US 2017358952 | A1 | 14-12-2017 | NONE | | |

EPO FORM P0459

For more details about this annex : see Official Journal of the European Patent Office, No. 12/82